(19) **Europäisches Patentamt**

**European Patent Office**

**Office européen des brevets**

(11) **EP 1 174 312 B1**

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(51) Int Cl.:
***B60R 21/01*** *(2006.01)*

(21) Anmeldenummer: **01114100.9**

(22) Anmeldetag: **09.06.2001**

(54) **Verfahren zum Erkennen der Schwere eines Fahrzeugzusammenstosses**

Method of determining the severity of a vehicle collision

Procédé de détermination de la gravité d'une collision automobile

(84) Benannte Vertragsstaaten:
**DE FR GB**

(30) Priorität: **21.07.2000 DE 10035505**

(43) Veröffentlichungstag der Anmeldung:
**23.01.2002 Patentblatt 2002/04**

(73) Patentinhaber: **Bayerische Motoren Werke Aktiengesellschaft**
**80809 München (DE)**

(72) Erfinder:
• **Kuhn, Andreas, Dr.**
**80807 München (DE)**
• **Urbahn, Jan, Dr.**
**80939 München (DE)**

(56) Entgegenhaltungen:
**EP-A- 0 882 624         DE-A- 19 854 380**

EP 1 174 312 B1

**Beschreibung**

Die Erfindung bezieht sich auf ein Verfahren zum Erkennen der Schwere eines Fahrzeugzusammenstosses, bei dem das Ausgangssignal eines oder mehrerer Beschleunigungssensoren aufbereitet und einem Neuronalen Netz zugeführt wird, das eine Auslöseeinheit für eine Insassenschutzeinrichtung steuert.

Ein derartiges Verfahren ist aus der DE 198 54 380 A bekannt. Dabei wird das Ausgangssignal mehrerer Beschleunigungssensoren aufbereitet und in das Neuronale Netz eingegeben, um eine Aussage über die Schwere eines Fahrzeugzusammenstosses zu erhalten. Durch die Auslöseeinheit werden mehrere insassenschutzeinrichtungen entsprechend der Schwere und des Verlaufs des Fahrzeugzusammenstosses gesteuert.

Ferner ist ein derartiges dem Oberbegriff des Anspruchs 1 entsprechendes Verfahren aus der EP 0 568 017 A2 bekannt. Das Neuronale Netz wird mit Hilfe von Beschleunigungssignalverläufen trainiert und damit in die Lage versetzt, im Crashfall eine Insassenschutzeinrichtung zeitrichtig zu aktivieren.

Der Erfindung liegt die Aufgabe zugrunde, ein Verfahren der eingangs genannten Art zu schaffen, das eine schnelle und aussagekräftige Möglichkeit bietet, die Schwere eines Fahrzeugzusammenstosses vorherzusagen.

Die Erfindung löst diese Aufgabe durch die Merkmale des Patentanspruchs 1.

Eingangsgrößen in das Neuronale Netz sind die aufbereiteten Signale von vorzugsweise mehreren im Fahrzeug verteilten Beschleunigungssensoren. Aufbereitet bedeutet, dass man ein- oder mehrfach integrierte bzw. auf andere Weise gefilterte Sensorsignale betrachtet und entweder die Zeitreihen selbst als Eingangsgröße verwendet, oder spezielle, charakteristische Werte aus den Signalverläufen ermittelt und dem Neuronalen Netz als Eingang zuführt. Diese charakteristischen Größen können Werte der aufbereiteten Signale zu bestimmten definierten Zeitpunkten bzgl. der Zeit der Auswertung, Signalwerte an speziellen Triggerzeitpunkten, erreichte Maximalwerte, Zeitspannen für bestimmte Signalanstiege, Steigungen im Signalverlauf, arithmetische Kombinationen von diversen aufbereiteten Signalen oder ähnliches sein.

Ausgangsgröße des Neuronalen Netzes ist eine Aussage über die Crashschwere und damit über die zu erwartende Insassenbelastung. Diese Aussage lässt sich aufgrund der mit Hilfe des Neuronalen Netzes gewonnenen Aussage über den zukünftigen Verlauf des (der) Beschleunigungssignalwerte besonders realitätsnah gestalten. Im Gegensatz dazu ist bei bisherigen Airbagauslösealgorithmen die Aussage über die Crashschwere meist direkt verbunden mit der Aktuatorik. Bei der zunehmenden Anzahl an Rückhaltesystemen würde eine Formulierung der Crashschwere damit immer komplizierter werden. Durch die vorliegende Erfindung wird eine parametrische Definition einer Crashschwere geliefert, welche unabhängig von der jeweils verwendeten Aktuatorik ist.

Demnach soll die Crashschwere bei einem Frontalaufprall definiert sein durch den zu erwartenden Verlauf des Beschleunigungssensorsignals. Dieser Verlauf ist identisch mit der zu erwartenden Beschleunigung der Fahrgastzelle.

Mit Hilfe des Neuronalen Netzes wird der anschließende zeitliche Verlauf des Signals berechnet. Das Ergebnis dieser Berechnung ist eine Aussage über die zu erwartende Vorverlagerung des nicht zurückgehaltenen Insassen. Daraus ergeben sich Aussagen wie z.B.:

Ohne Rückhaltung würde der Insasse in 50 ms mit ungefähr 10 m/s gegen das Lenkrad prallen (entspricht etwa 300 mm Vorverlagerung).

Dieser Aussage ist dann eine entsprechende Aktion der Insassenschutz- und rückhaltungseinrichtungen entgegenzusetzen, die durch die Auslöseeinheit gesteuert werden.

Die Berücksichtigung der freien Bewegung des Fahrzeuginsassens im Zusammenhang mit der Ansteuerung von Insassenschutz- und -rückhaltungseinrichtungen ist grundsätzlich bereits aus der FR 21 84 307 und der EP 327 853 B bekannt. Dabei wird ein Airbagsystem ausgelöst, wenn die zu erwartende Vorverlagerung des Fahrzeuginsassen einen bestimmten Schwellwert überschreitet (FR 21 84 307) bzw. wenn dieser Schwellwert zu zwei aufeinanderfolgenden Zeitpunkten überschritten wird (EP 327 853 B). In beiden Fällen aber wird nicht das zukünftige Beschleunigungsverhalten des Fahrzeuginsassen abgeleitet, sondern nur die Unterscheidung "FIRE/NO-FIRE" gemacht. Im Gegensatz dazu wird bei der Erfindung mit Hilfe des Neuronalen Netzes eine Aussage über die zu erwartenden Belastung des Fahrzeuginsassen gewonnen und daraus die Möglichkeit abgeleitet, dieser Belastung durch eine angepasste Auslösestrategie der Insassenschutz- und rückhaltungseinrichtungen gezielt entgegenzuwirken.

Die erfindungsgemäße Aufbereitung der Beschleunigungssignale mit Hilfe des Neuronalen Netzes und die Vorhersage der zu erwartenden Belastung liefert eine allgemeingültige Aussage (im folgenden Crashschwereparameter=CSP genannt), weil in diese Aussage über die Crashschwere weder Fahrzeugtyp, -ausstattung oder Lastfall/Barriere eingehen. Die auftretenden Werte des CSP sind zwar abhängig von der Fahrzeugstruktur, die Auswirkung auf den Fahrzeuginsassen hängen aber nur vom CSP-Wert selbst ab.

Der CSP bezieht sich jetzt direkt auf die Insassenbelastung. Es muss nicht mehr von Auftreffposition/-geschwindigkeit/Barrierensteifigkeit oder Ähnlichem auf die Insassenbelastung geschlossen werden.

Mit dem erfindungsgemäß bestimmten CSP ist es auch möglich, Unfallsituationen, bei welchen unterschiedliche Auslösestrategien der Insassenschutz- und rückhalteeinrichtungen ablaufen sollen, hinreichend genau zu unterscheiden. Der CSP ist auch nicht abhängig von den Insassenrückhalteeinrichtungen. Damit ist es möglich, diese in ihrer Wirksamkeit optimal abzustimmen.

Wie in der einzigen Figur gezeigt, ist der CSP ein zu erwartender zeitlicher Kurvenverlauf. Dieser Kurvenverlauf muss mit möglichst wenigen Parametern in ausreichender Weise beschrieben werden. Die eigentliche Insassenvorverlagerung ist der Vorverlagerungsweg über die Zeit $s=s(t)$ dargestellt. Sie lässt sich auch angeben durch den Geschwindigkeitsverlauf $v=v(t)=s'(t)$ oder den Beschleunigungsverlauf $a=a(t)=v'(t)=s''(t)$.

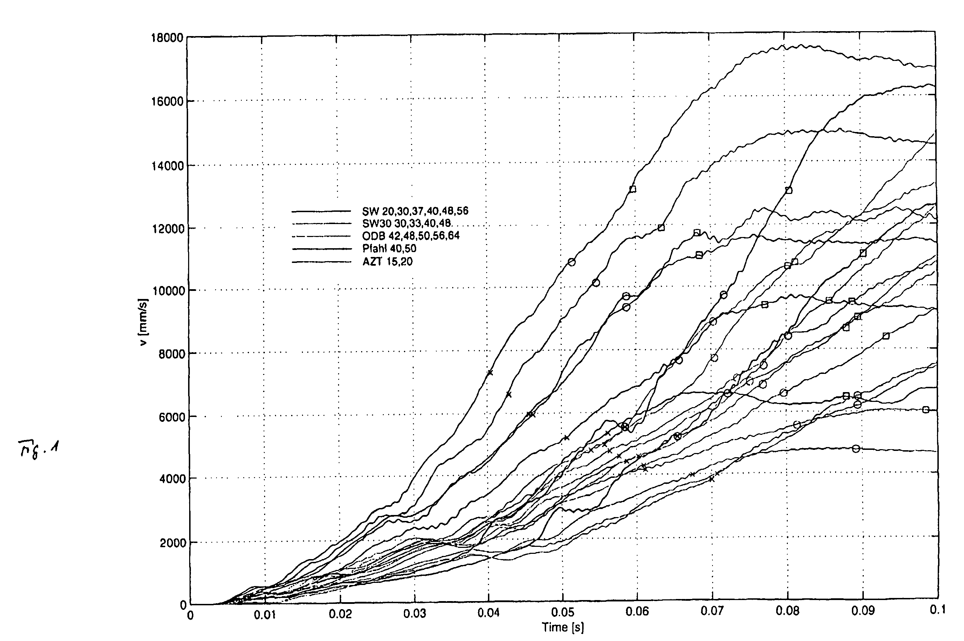

In Fig. 1 ist die Vorverlagerungsgeschwindigkeit eines nicht dargestellten Fahrzeugs mit unterschiedlichen Geschwindigkeiten von 20 und 40 km/h gegen

- die starre Wand mit 100% Überdeckung (Kurven 1a/1b),

- die deformierbare Barriere mit 40% Überdeckung (2a/2b),

- die schräge Wand (3a/3b),

- den mittigen Pfahl (4a/4b) und

- die starre Wand mit 40% Überdeckung (5a/5b

Kreuz, Kreis und Quadrat kennzeichnen jeweils den Zeitpunkt mit 100, 200 und 300mm Vorverlagerung.

Zur Charakterisierung der Vorverlagerung im implementierten Algorithmus gibt es unterschiedliche zielführende Möglichkeiten.

A. Globale Bewertungsgröße und Bezug zu einer Referenzzeit

Der gesamte Vorverlagerungsverlauf wird anhand charakteristischer Größen beschrieben. Beispiel hierfür wäre etwa die mittlere Beschleunigung zwischen 100 und 300mm Insassenvorverlagerung.
Sei

$$t_1 = t(s = 100\text{mm}) \qquad\qquad v_1 = v(t_1) \qquad\qquad (1)$$

$$t_3 = t(s = 300\text{mm}) \qquad\qquad v_3 = v(t_3) \qquad\qquad (2)$$

dann entspricht der Quotient

$$a_m \approx \frac{v_3 - v_1}{t_3 - t_1} = \frac{dv}{dt} \qquad\qquad\qquad (3)$$

dieser mittleren Beschleunigung, welche annähernd mit der EES[1] korreliert ist und somit Aufschluss über die zu aktivierenden Insassenrückhaltesysteme gibt. Wenn dieser Parameter zum Zeitpunkt $t$ mit ausreichender Sicherheit detektiert wird, weiß man damit welche Rückhaltesysteme zu aktivieren sind. Wann diese zu aktivieren sind, muss zusätzlich angegeben werden, beispielweise durch einen zeitlichen Bezug

$$dt_{FIRE} = t_1 - 30\text{ms} - t \qquad\qquad\qquad (4)$$

[1] Energy Equivalent Speed

Die Crashschwere, welche für eine Auslöseentscheidung herangezogen wird und Ausgangsgröße aus dem Neuronalen Netz ist, wäre dann das Parameterpaar ($a_m$, $dt_{FIRE}$).

B. Lokale Größen mit festem zeitlichen Bezug zur Auswertezeit

Im Gegensatz zu A. wird keine globale Größe über die zu erwartende Insassenvorverlagerung ausgewertet, sondern nur eine Vorschau über einen definierten Zeitraum in Bezug zu Auswertezeit *t*.

Die Auswertung des Neuronalen Netzes zum Zeitpunkt *t* während des Unfalls liefert dann beispielsweise einen Schätzwert für die mittlere zu erwartende Insassenbeschleunigung bzw. -vorverlagerung zum Zeitpunkt *t*+30ms, *t*+40ms, usw. Wie fein und genau diese Aussage vorliegen muss, hängt von den verwendeten Aktuatoren ab.

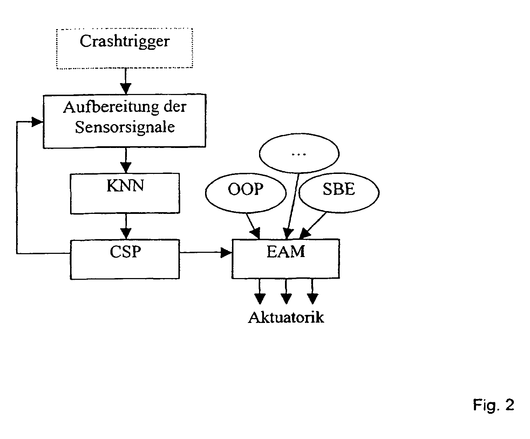

Ein Airbagauslösealgorithmus hätte damit folgende, in Fig. 2 dargestellte Struktur:

Demnach werden die aufbereiteten Sensorsignale (unter Umständen erst nach Erreichen eines Crashtriggers, d.h. dem Überschreiten eines Beschleunigungssignalschwellwerts) einem Neuronalen Netz zugeführt, welches die beschriebenen Parameter zur Charakterisierung der Crashschwere ausgibt. Es kann sich dabei um die Werte der Beschleunigungssensoren zu einem bestimmten Zeitpunkt (Überschreiten des Schwellwerts) handeln. Alternativ können die Signalwerte ständig und vorzugsweise in zeitlich regelmäßigen Abständen von z.B. 0,25 msec aufgenommen werden und bei Überschreiten des Crashtriggers die diesem Zeitpunkt vorhergehenden 2,3,... Signalwerte ausgewertet werden. Es wird somit die dem Crashtrigger vorhergehende Signal-Historie" ausgewertet. Auf diese Weise lässt sich mit Hilfe des Neuronalen Netzes aus der Historie der zukünftige Signalverlauf vorhersagen.

Die so gewonnene Information über den zukünftigen Beschleunigungssignalwerteverlauf wird daraufhin mit Informationen aus anderen Systemen wie Sitzbelegungserkennung, Out-Of-Position-Sensoren, PreCrash-Sensoren u.a. zu einer Auslöseentscheidung verknüpft. Dies erfolgt in einer sogenannten Ereignisauslösematrix, welche unter Umständen wieder als Neuronales Netz, Fuzzy Logic oder ähnlichem ausgeführt ist.

Der CSP ist die Schnittstelle zwischen Sensorik und Aktuatorik. Da der CSP die dargestellten Vorteile aufweist, können Sensorik und Aktuatorik für sich ausgelegt werden.

Damit ergibt sich insgesamt ein Verfahren, das es mit geringem Aufwand ermöglicht, schnell und sicher Aussagen über die Schwere und den Verlauf eines Fahrzeugzusammenstoßes zu liefern und Insassenschutzeinrichtungen bedarfsgerecht anzusteuern.

**Patentansprüche**

1. Verfahren zum Erkennen der Schwere eines Fahrzeugzusammenstosses, bei dem das Ausgangssignal eines oder mehrerer Beschleunigungssensoren aufbereitet und einem Neuronalen Netz zugeführt wird, das eine Auslöseeinheit für eine Insassenschutzeinrichtung steuert, mit folgenden Merkmalen:

   durch die Auslöseeinheit werden mehrere Insassenschutzeinrichtungen entsprechend der Schwere und des Verlaufs des Fahrzeugzusammenstosses gesteuert,
   mit Hilfe des Neuronalen Netzes wird das Ausgangssignal des Beschleunigungssensors in seinem zukünftigen zeitlichen Verlauf auf der Basis der Beschleunigungssensorsignalwerte zu mindestens einem definierten Zeitpunkt vorhergesagt, **dadurch gekennzeichnet, dass** die Eingabe der Beschleunigungssensorsignale in das Neuronale Netz zu dem Zeitpunkt erfolgt, zu dem ein Schwellwert dieses Signals überschritten wird, und dass bei diesen Beschleunigungssensorsignalen es sich um die in zeitlich regelmäßigen Abständen aufgenommenen und diesem Zeitpunkt vorhergehenden Signalwerte handelt.

2. Verfahren nach Anspruch 1,
   **dadurch gekennzeichnet,**
   **dass** die Eingabe der Beschleunigungssensorsignale in das Neuronale Netz in aufeinander folgenden Zeitpunkten erfolgt.

3. Verfahren nach Anspruch 2,
   **dadurch gekennzeichnet,**
   **dass** die Zeitpunkte äquidistant sind.

**Claims**

1. A method for recognising the severity of a vehicle collision, in which the output signal of one or more acceleration sensors is processed and fed to a neural network, which controls a release unit for an occupant protection device, comprising the following features: a plurality of occupant protection devices are controlled by the release unit according to the severity and the course of the vehicle collision with the aid of the neural network, the future time course of the output signal of the acceleration sensor is predicted on the basis of the acceleration sensor signal values at at least one defined instant, **characterised in that** the input of the acceleration sensor signals into the neural network takes place at the instant at which a threshold value of this signal is exceeded and **in that** these acceleration sensor signals are the signal values which are recorded at regular time intervals and precede this instant.

2. A method according to claim 1, **characterised in that** the input of the acceleration sensor signals into the neural network takes place at successive instants.

3. A method according to claim 2, **characterised in that** the instants are equidistant.


**Revendications**

1. Procédé pour déterminer la gravité d'une collision de véhicule, selon lequel on traite le signal d'un ou plusieurs capteurs d'accélération et on le fournit à un réseau neuronal qui commande une unité de déclenchement d'une installation de protection des passagers, selon lequel :

- l'unité de déclenchement commande plusieurs installations de protection des passagers en fonction de la gravité et de l'évolution de la collision,
- le réseau neuronal prévoit l'évolution future du signal de sortie du capteur d'accélération en s'appuyant sur les valeurs du signal d'accélération à au moins un instant défini,

**caractérisé en ce que**
ces signaux de capteurs d'accélération sont pris à des intervalles de temps réguliers et à cet instant il s'agit de valeurs de signaux antérieurs.

2. Procédé selon la revendication 1,
**caractérisé en ce que**
les signaux de capteurs d'accélération sont introduits dans le réseau neuronal à des instants successifs.

3. Procédé selon la revendication 2,
**caractérisé en ce que**
les instants sont équidistants.

Fig. 1

```
Crashtrigger
     │
     ▼
Aufbereitung der
Sensorsignale
     │
     ▼
   KNN
     │
     ▼
   CSP  ──────►  EAM
```

OOP    ...    SBE

Aktuatorik

Fig. 2